# EUROPEAN PATENT APPLICATION

(11) **EP 4 459 575 A1**
(43) Date of publication of application: **06.11.2024**
(21) Application number: 22914124.7
(22) Date of filing: 08.12.2022
(51) Int. Cl.: G06V 40/16, G06V 40/40

(54) **LIVENESS DETECTION METHOD, DEVICE AND APPARATUS, AND STORAGE MEDIUM**

(30) Priority: 30.12.2021 CN 202111659337
(71) Applicant: Hangzhou Ezviz Software Co., Ltd., Zhejiang 310051 (CN)
(72) Inventor: WANG, Sheng, Hangzhou, Zhejiang 310051 (CN)
(74) Representative: Vogelbruch, Keang
(86) International application number: PCT/CN2022/137427
(87) International publication number: WO 2023/124869

(57) **Abstract**

A method, apparatus, device, and storage medium for living body detection are provided. The method includes: acquiring a face image to be detected, and performing image extraction on a plurality of preset face parts involved in the face image to obtain a plurality of face part images (S102); respectively performing feature extraction on the plurality of face part images and fusing features obtained by the feature extraction through a pre-trained multi-modal living body detection model (S104); and performing high-dimensional feature generation processing on the fused features through the multi-modal living body detection model, and determining whether a user corresponding to the face image is a living user based on a high-dimensional feature generation result (S106).

## Description

### TECHNICAL FIELD

The present invention relates to the field of image processing technology, and in particular to a method, apparatus, device, and storage medium for living body detection.

### BACKGROUND

At present, living body detection technology is applied in more and more scenarios, such as attendance record, access control identification, or payment identification. For example, in the case of a payment identification scenario, if a user selects a face identification method to make a payment through a mobile phone, after the mobile phone acquires a face image of the user, a backend server determines, on the one hand, whether the acquired face image is similar to a pre-stored face image of the user, and determines, on the other hand, whether the user is a living user based on the face image of the user. However, some illegal users may obtain a photo of a legitimate user by abnormal means, and use the photo of the legitimate user to pass living body verification, in order to perform illegal operations harmful to the interests of the legitimate user. In view of the above, how to accurately perform living body detection is an urgent problem to be solved.

### SUMMARY

Embodiments of the present invention aim to provide a method, apparatus, device, and storage medium for living body detection, which can perform living body detection based on a face image, thereby effectively improving the accuracy of the living body detection.

In an aspect, embodiments of the present invention provide a method for living body detection, comprising steps of: acquiring a face image to be detected, and performing image extraction on a plurality of preset face parts involved in the face image to obtain a plurality of face part images; obtaining fusion features through a pre-trained multi-modal living body detection model based on the plurality of face part images; and generating a high-dimensional feature through the multi-modal living body detection model based on the fusion features, and determining whether a user corresponding to the face image is a living user based on the high-dimensional feature.

In another aspect, embodiments of the present invention provide an apparatus for living body detection, comprising: a memory storing a face image to be detected and a pre-trained multi-modal living body detection model; and a processor configured to perform image extraction on a plurality of preset face parts involved in the face image to obtain a plurality of face part images, obtain fusion features through the multi-modal living body detection model based on the plurality of face part images, generate a high-dimensional feature through the multi-modal living body detection model based on the fusion features, and determine whether a user corresponding to the face image is a living user based on the high-dimensional feature.

In yet another aspect, embodiments of the present invention provide a device for living body detection, comprising: a processor; and a memory configured to store computer-executable instructions, wherein the computer-executable instructions, when executed, cause the processor to perform steps of: acquiring a face image to be detected, and performing image extraction on a plurality of preset face parts involved in the face image to obtain a plurality of face part images; obtaining fusion features through the multi-modal living body detection model based on the plurality of face part images; and generating a high-dimensional feature through the multi-modal living body detection model based on the fusion features, and determining whether a user corresponding to the face image is a living user based on the high-dimensional feature.

In still another aspect, embodiments of the present invention provide a storage medium for storing computer-executable instructions, which, when executed, perform steps of: acquiring a face image to be detected, and performing image extraction on a plurality of preset face parts involved in the face image to obtain a plurality of face part images; obtaining fusion features through the multi-modal living body detection model based on the plurality of face part images; and generating a high-dimensional feature through the multi-modal living body detection model based on the fusion features, and determining whether a user corresponding to the face image is a living user based on the high-dimensional feature.

With embodiments of the present invention, a plurality of face part images are obtained by performing image extraction on a plurality of preset face parts involved in a face image, fusion features are obtained through a multi-modal living body detection model based on the plurality of face part images, a high-dimensional feature is generated based on the fusion features, and it is determined whether a user corresponding to the face image is a living user based on the high-dimensional feature. Features of the plurality of preset face parts are combined to determine whether a user corresponding to the face image is a living user, which effectively improves the accuracy of the living body detection compared to a living body detection method based on features of a single face part.

### BRIEF DESCRIPTION OF DRAWINGS

In order to more clearly illustrate technical solutions in embodiments of the present invention or in the related art, drawings to be used in description of the embodiments or the related art will be briefly introduced below. It will be apparent that the drawings in the following description merely illustrate some of the embodiments in the present invention. For those ordinary skilled in the art, other drawings may be obtained from these drawings without any creative efforts.
FIG. 1 is a schematic flow chart illustrating a method for living body detection according to an embodiment of the present invention.
FIG. 2 is a schematic flow chart illustrating a method for living body detection according to another embodiment of the present invention.
FIG. 3 is a schematic structural diagram illustrating a multi-modal living body detection model according to an embodiment of the present invention.
FIG. 4 is a schematic diagram illustrating a process of generating a high-dimensional feature according to an embodiment of the present invention.
FIG. 5 is a schematic diagram illustrating application of a method for living body detection according to an embodiment of the present invention.
FIG. 6 is a schematic diagram illustrating a process of training a multi-modal living body detection model according to an embodiment of the present invention.
FIG. 7 is a schematic structural diagram illustrating an apparatus for living body detection according to an embodiment of the present invention.
FIG. 8 is a schematic structural diagram illustrating a device for living body detection according to an embodiment of the present invention.

### DETAILED DESCRIPTION

In order for those skilled in the art to better understand technical solutions in the present invention, technical solutions in embodiments of the present invention will be clearly and completely described below in conjunction with the drawings in the embodiments of the present invention. It will be apparent that the described embodiments are merely a part of the embodiments of the present invention, not all of the embodiments. All other embodiments obtained by those ordinary skilled in the art based on the embodiments of the present invention without any creative efforts should fall within the scope of protection of the present invention.

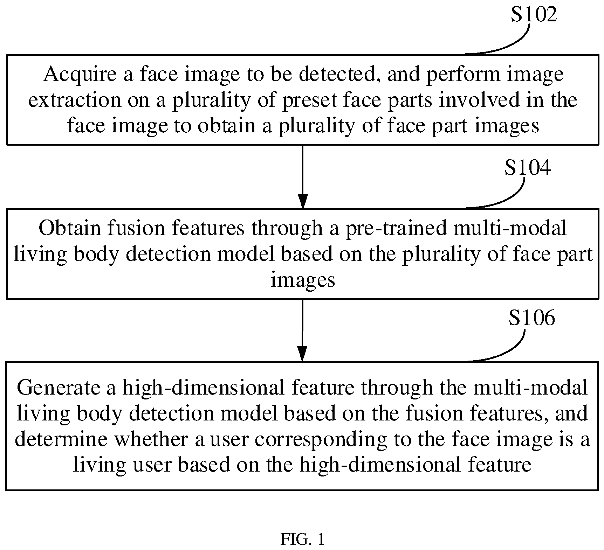

FIG. 1 is a schematic flow chart illustrating a method for living body detection according to an embodiment of the present invention. As shown in FIG. 1, the method includes the following steps S102 to S106.

At step S102, a face image to be detected is acquired, and image extraction is performed on a plurality of preset face parts involved in the face image to obtain a plurality of face part images.

At step S104, fusion features are obtained through a pre-trained multi-modal living body detection model based on the plurality of face part images.

In a possible implementation, the step S104 may further include: performing feature extraction on the face part images through the multi-modal living body detection model to obtain features of the preset face parts; and fusing the features of the preset face parts through the multi-modal living body detection model according to a preset feature fusion algorithm to obtain the fusion features.

At step S106, a high-dimensional feature is generated through the multi-modal living body detection model based on the fusion features, and it is determined whether a user corresponding to the face image is a living user based on the high-dimensional feature.

In a possible implementation, the step S106 may further include: performing a combination analysis on the fusion features through the multi-modal living body detection model to obtain a supplementary feature, and using the fusion features and the supplementary feature together as to-be-processed features; performing set partitioning on the to-be-processed features through the multi-modal living body detection model, and generating a high-dimensional feature for each set based on features in the set, where feature correlation among the features in each set satisfies requirement for generating the high-dimensional feature; in the case that high-dimensional features generated for respective sets have high-dimensional features among which the feature correlation satisfies the requirement for generating the high-dimensional feature, repeatedly performing steps of performing the set partitioning and generating the high-dimensional feature through the multi-modal living body detection model until the high-dimensional features generated for respective sets have no high-dimensional features among which the feature correlation satisfies the requirement for generating the high-dimensional feature; and determining whether the user corresponding to the face image is a living user through the multi-modal living body detection model based on finally generated high-dimensional features and a feature classification rule corresponding to each of the finally generated high-dimensional features.

Determining whether the user corresponding to the face image is the living user through the multi-modal living body detection model based on the finally generated high-dimensional features and the feature classification rule corresponding to each of the finally generated high-dimensional features, further includes: classifying each of the finally generated high-dimensional features through the multi-modal living body detection model based on the finally generated high-dimensional features and the feature classification rule corresponding to each of the finally generated high-dimensional features, with a classification result including belonging to a living feature or not belonging to a living feature; and in response to a proportion of the number of high-dimensional features of which the classification result is belonging to the living feature being greater than a preset proportion, determining the user corresponding to the face image is the living user, otherwise determining the user corresponding to the face image is not the living user.

In this embodiment, a plurality of face part images are obtained by performing image extraction on a plurality of preset face parts involved in a face image, fusion features are obtained through a pre-trained multi-modal living body detection model based on the plurality of face part images, a high-dimensional feature is generated based on the fusion features, and it is determined whether a user corresponding to the face image is a living user based on the high-dimensional feature. Features of the plurality of preset face parts are combined to determine whether a user corresponding to the face image is a living user, which effectively improves the accuracy of the living body detection compared to a living body detection method based on features of a single face part.

The method in this embodiment can be performed by a living body detection device. In an embodiment, the living body detection device may be a terminal device that acquires a face image and performs living body detection, such as a mobile phone, a computer, or a tablet computer. Such a terminal device acquires the face image through a camera provided therein such as a near-field infrared camera, and performs the method flow in FIG. 1 for the living body detection through an algorithm therein. In another embodiment, the living body detection device may be a backend server that communicates with a frontend terminal device. The frontend terminal device may be a device such as a mobile phone, a computer, or a tablet computer. The frontend terminal device is provided with a camera such as a near-field infrared camera. The frontend terminal device acquires a face image through the camera and transmits the face image to the backend server, and the backend server performs the method flow in FIG. 1 for the living body detection through an algorithm therein.

In the above step S102, the face image to be detected is acquired. For example, when an execution subject of the method is a device such as a mobile phone, a computer, or a tablet computer, the device acquires the face image to be detected through a camera therein. For another example, when the execution subject of the method is a backend server, the backend server receives the face image to be detected from a frontend terminal device such as a mobile phone, a computer, or a tablet computer. The face image to be detected may be an infrared image, particularly a near-infrared image.

In the above step S102, image extraction is performed on a plurality of preset face parts involved in the face image to be detected to obtain a plurality of face part images. Each face part image corresponds one-to-one with each preset face part. In an embodiment, the plurality of preset face parts includes at least two of a left eye, a right eye, a nose, a mouth, a left cheek, and a right cheek. For example, in the case that the plurality of preset face parts includes a left eye, a right eye, a nose, a mouth, a left cheek, and a right cheek, six face part images may be extracted, which are a left eye image, a right eye image, a nose image, a mouth image, a left cheek image, and a right cheek image. However, the left cheek image and the right cheek image may be combined into one cheek image. In specific implementation, the preset face parts may be selected from the left eye, the right eye, the nose, the mouth, the left cheek, and the right cheek as needed, which is not limited in this embodiment.

In an embodiment, performing image extraction on the plurality of preset face parts involved in the face image to obtain the plurality of face part images, includes: performing image matting on the plurality of preset face parts involved in the face image to obtain a face part image for each of the preset face parts, where each of the preset face parts may correspond to one face part image.

In another embodiment, performing image extraction on the plurality of preset face parts involved in the face image to obtain the plurality of face part images, includes steps (a1), (a2), and (a3).

At step (a1), image matting is performed on a face in the face image to obtain a face matting image.

At step (a2), position detection is performed on each preset face part in the face matting image by using a preset face part detection algorithm to obtain key position coordinates of each preset face part.

At step (a3), image matting is performed on each preset face part in the face matting image based on the key position coordinates of each preset face part to obtain a respective face part image.

First, in the step (a1), image matting is performed on the face in the face image to obtain the face matting image, which may be a rectangular image involving the face. Then, in the step (a2), position detection is performed on each preset face part in the face matting image by using the preset face part detection algorithm, such as a face key point detection algorithm, to obtain the key position coordinates of each preset face part. In the case that the preset face part is the left eye or the right eye, the key position coordinates may include coordinates of left and right vertexes of the eye, coordinates of a center point of the pupil, and coordinates of a plurality of key points on an edge of the eye. In the case that the preset face part is the nose, the key position coordinates may include coordinates of a plurality of key points on the nose. In the case that the preset face part is the mouth, the key position coordinates may include coordinates of left and right vertexes of the mouth and coordinates of a plurality of key points on an edge of the mouth. In the case that the preset face part is the left cheek or the right cheek, the key position coordinates may include coordinates of a plurality of key points on a left edge of the left cheek or coordinates of a plurality of key points on a right edge of the right cheek.

Finally, in the step (a3), image matting is performed on each preset face part in the face matting image based on the key position coordinates of each preset face part to obtain the respective face part image. For example, image matting is performed on the left eye in the face matting image based on coordinates of left and right vertexes of the left eye, coordinates of a center point of the pupil, and coordinates of a plurality of key points on an edge of the left eye to obtain the left eye image, and image matting is performed on the right eye in the face matting image based on coordinates of left and right vertexes of the right eye, coordinates of a center point of the pupil, and coordinates of a plurality of key points on an edge of the right eye to obtain the right eye image.

In an embodiment, before performing image matting on the face in the face image to obtain the face matting image, position coordinates of preset feature points are detected from the face image, and pose correction processing is performed on the face in the face image based on the position coordinates of the preset feature points. Accordingly, performing image matting on the face in the face image to obtain the face matting image, includes performing image matting on the pose-corrected face in the face image to obtain the face matting image.

In an embodiment, before performing image matting on the face, the position coordinates of the preset feature points are detected from the face image. The preset feature points are feature points that may indicate whether a pose of the face is horizontal or not, and the preset feature points include, but are not limited to, center points of two pupils, and vertexes of two corners of the mouth. Pose correction processing may be performed on the face in the face image based on the position coordinates of the preset feature points by method 1 and/or method 2. In method 1, the face image is rotated, such that a line connecting the center points of the two pupils is in a horizontal state. In method 2, the face image is rotated, such that a line connecting the vertexes of the two corners of the mouth is in a horizontal state. Herein, the "and/or" means that pose correction may be performed on the face by either or both of method 1 and method 2. Accordingly, after the pose correction on the face is completed, image matting is performed on the pose-corrected face in the face image to obtain the face matting image.

In another embodiment, before performing image matting on the face, the position coordinates of the preset feature points are detected from the face image. The preset feature points are feature points that may indicate whether a pose of the face is horizontal or not, and the preset feature points include, but are not limited to, center points of two pupils, vertexes of two corners of the mouth, and coordinates of vertexes of a rectangular frame where the face is located. Pose correction processing may be performed on the face in the face image based on the position coordinates of the preset feature points by method 1 and/or method 2. In method 1, the face in the face image is rotated according to the rectangular frame where the face is located, such that a line connecting the center points of the two pupils is in a horizontal state. In method 2, the face in the face image is rotated according to the rectangular frame where the face is located, such that a line connecting the vertexes of the two corners of the mouth is in a horizontal state. Herein, the "and/or" means that pose correction may be performed on the face by either or both of method 1 and method 2. Accordingly, after the pose correction on the face is completed, image matting is performed on the pose-corrected face in the face image to obtain the face matting image.

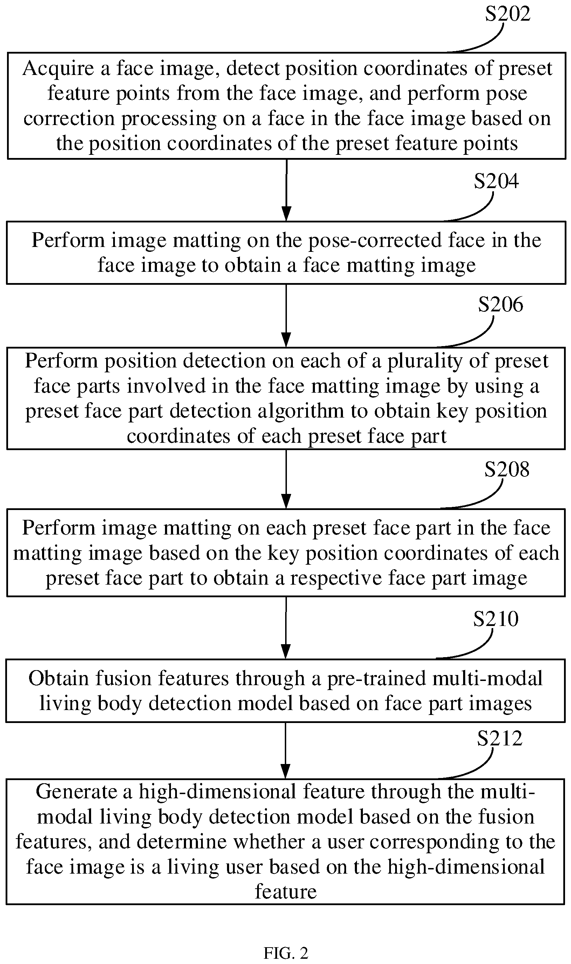

FIG. 2 is a schematic flow chart illustrating a method for living body detection according to another embodiment of the present invention. As shown in FIG. 2, the method is performed by a backend server and includes steps S202 to S212.

At step S202, a face image is acquired, position coordinates of preset feature points are detected from the face image, and pose correction processing is performed on a face in the face image based on the position coordinates of the preset feature points.

At step S204, image matting is performed on the pose-corrected face in the face image to obtain a face matting image.

At step S206, position detection is performed on each of a plurality of preset face parts involved in the face matting image by using a preset face part detection algorithm to obtain key position coordinates of each preset face part.

At step S208, image matting is performed on each preset face part in the face matting image based on the key position coordinates of each preset face part to obtain a respective face part image.

At step S210, fusion features are obtained through a pre-trained multi-modal living body detection model based on the face part images.

At step S212, a high-dimensional feature is generated through the multi-modal living body detection model based on the fusion features, and it is determined whether a user corresponding to the face image is a living user based on the high-dimensional feature.

In the above steps S210 to S212, the fusion features are obtained through the pre-trained multi-modal living body detection model based on the face part images, the high-dimensional feature is generated through the multi-modal living body detection model based on the fusion features, and it is determined whether the user corresponding to the face image is a living user based on the high-dimensional feature.

In this embodiment, a multi-modal living body detection model for living body detection is trained in advance, where the "multi-modal" means that the living body detection model has a plurality of image input channels, each of which corresponds to one preset face part and is configured to receive one face part image of one preset face part, and a feature extraction module is provided inside the model corresponding to each image input channel to extract features from a face part image of a corresponding preset face part.

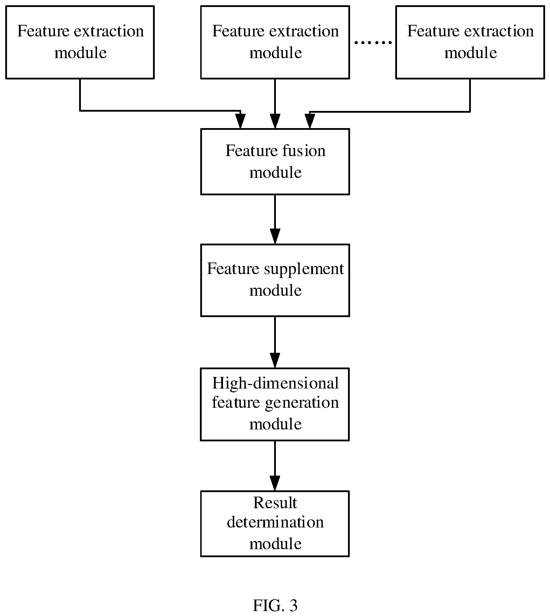

FIG. 3 is a schematic structural diagram illustrating a multi-modal living body detection model according to an embodiment of the present invention. As shown in FIG. 3, the model may be functionally divided to include a plurality of feature extraction modules corresponding one-to-one with the preset face parts, a feature fusion module, a feature supplement module, a high-dimensional feature generation module, and a result determination module. The plurality of feature extraction modules corresponds one-to-one with the preset face parts and are configured to receive face part images of corresponding preset face parts and perform feature extraction on the received face part images to obtain features of the corresponding preset face parts. However, the model in FIG. 3 may further include a plurality of image input channels (not shown in the drawings) corresponding one-to-one with the preset face parts, each of the input channels being connected to a corresponding feature extraction module.

Based on the model structure in FIG. 3, in the above step S104, obtaining the fusion features through the pre-trained multi-modal living body detection model based on the plurality of face part images, includes steps (b1) and (b2).

At step (b 1), feature extraction is performed on the face part images respectively through the feature extraction modules to obtain features of the preset face parts.

At step (b2), the features of the preset face parts are fused through the feature fusion module according to a preset feature fusion algorithm to obtain the fusion features.

Firstly, the feature extraction modules correspond one-to-one with the preset face parts, and feature extraction is performed on the face part image of each preset face part through a corresponding feature extraction module, so as to obtain features of each preset face part. Then, the features of the preset face parts are fused through the feature fusion module according to a preset feature fusion algorithm, such as a feature fusion algorithm based on a linear feature dependency model or a feature fusion algorithm based on a sparse representation theory, to obtain the fusion features.

There is a plurality of preset face parts, and each preset face part includes a plurality of features. On this basis, when the features of the preset face parts are fused to obtain the fusion features, a plurality of features involved in the same preset face part may be fused, and a plurality of features involved in different preset face parts may be fused, for example, a plurality of features involved in the left eye may be fused, and a plurality of features involved in the left eye and in the right eye may be fused, enabling multi-dimensional fusion of the features of the preset face parts.

When a plurality of features involved in the same preset face part are fused, the specific features to be fused can be learned by the multi-modal living body detection model. When a plurality of features involved in different preset face parts are fused, the specific features to be fused can also be learned by the multi-modal living body detection model.

After performing feature fusion to obtain the fusion features, in the above step S106, generating the high-dimensional feature through the multi-modal living body detection model based on the fusion features, and determining whether the user corresponding to the face image is a living user based on the high-dimensional feature, include steps (c1) to (c4).

At step (c1), combination analysis is performed on the fusion features through the feature supplement module to obtain a supplementary feature, and the fusion features and the supplementary feature are used together as to-be-processed features.

At step (c2), set partitioning is performed on the to-be-processed features through the high-dimensional feature generation module, and the high-dimensional feature is generated for each set based on features in the set, where feature correlation among the features in each set satisfies requirement for generating the high-dimensional feature.

At step (c3), in the case that high-dimensional features generated for respective sets have high-dimensional features among which the feature correlation satisfies the requirement for generating the high-dimensional feature, steps of performing the set partitioning and generating the high-dimensional feature are repeatedly performed through the high-dimensional feature generation module until the high-dimensional features generated for respective sets have no high-dimensional features among which the feature correlation satisfies the requirement for generating the high-dimensional feature.

At step (c4), it is determined whether the user corresponding to the face image is a living user through the result determination module based on finally generated high-dimensional features and a feature classification rule corresponding to each of the finally generated high-dimensional features.

In the step (c1), combination analysis is performed on the fusion features through the feature supplement module in the multi-modal living body detection model to obtain the supplementary feature, and the fusion features and the supplementary feature are used together as the to-be-processed features. Since the fusion features are obtained by fusing the features of each of the preset face parts, the fusion features include the features of each of the preset face parts. In this step, performing combination analysis on the fusion features through the feature supplement module to obtain the supplementary feature, includes: extracting features with a combination relationship from the fusion features, where the features with the combination relationship can be combined together to generate a new feature, that is, the supplementary feature; and analyzing the features with the combination relationship, and generating the supplementary feature based on the combination relationship between the features. The features with the combination relationship can be from the same preset face part or from different preset face parts. How to extract the features with the combination relationship from the fusion features and how to determine which features have the combination relationship with each other can be learned by the multi-modal living body detection model.

In one case, the supplementary feature is a high-dimensional feature with a relatively high dimension and has a relatively explicit entity meaning. For example, in an example, a left eye skin feature and a right eye skin feature are extracted from the fusion features, and combination analysis is performed on the left eye skin feature and the right eye skin feature to obtain the supplementary feature, where the supplementary feature is indicative of whether the user wears glasses. In another case, the supplementary feature is a feature with a relatively low dimension and does not have a relatively explicit entity meaning. For example, color values of two adjacent pixel blocks on the skin of the left eye are extracted from the fusion features, and combination analysis is performed on the color values of the two adjacent pixel blocks to obtain the supplementary feature, where the supplementary feature is indicative of an average color value of the two adjacent pixel blocks on the skin of the left eye. In this step, the supplementary feature and the fusion features may be used together as the to-be-processed features.

In the above step (c2), set partitioning is performed on the to-be-processed features through the high-dimensional feature generation module, and the high-dimensional feature is generated for each set based on features in the set. The to-be-processed features include the supplementary feature and the fusion features described above, and the fusion features in turn include the features of each preset face part described above, thus the to-be-processed features include a large number of features. The feature correlation among the individual features included in each set satisfies the requirement for generating the high-dimensional feature. First, set partitioning is performed on the to-be-processed features through the high-dimensional feature generation module, such that a plurality of features are included in each set, and the feature correlation among the plurality of features included in each set satisfies the requirement for generating the high-dimensional feature, that is, the plurality of features included in each set can be used to generate the high-dimensional feature, and such a plurality of features are partitioned into a set.

The feature correlation refers to the degree of correlation among the plurality of features. The greater the feature correlation, the more the plurality of features can be together to generate a high-dimensional feature. For example, the left eye skin color and the right eye skin color together can indicate whether the user wears glasses, and the correlation between the left eye skin color and the right eye skin color is relatively strong. However, the left eye skin color and a cheek texture feature together cannot generate a higher dimensional feature, and the correlation between the left eye skin color and the cheek texture feature is relatively weak. The requirement for generating the high-dimensional feature can be that the correlation among the plurality of features is greater than a preset degree. When the correlation degree among the plurality of features is greater, the plurality of features together can generate a new high-dimensional feature, otherwise the plurality of features together cannot generate a new high-dimensional feature.

According to the above principle, the to-be-processed features with relatively strong correlation are partitioned into the same set, and the high-dimensional feature is generated based on the features in the set. For example, a left cheek skin color feature and a right cheek skin color feature are partitioned into a set, to generate a high-dimensional feature based on the left cheek skin color feature and the right cheek skin color feature, where the high-dimensional feature is indicative of whether the user wears a mask. For another example, a left cheek skin texture feature and a right cheek skin texture feature are partitioned into a set, to generate a high-dimensional feature based on the left cheek skin texture feature and the right cheek skin texture feature, where the high-dimensional feature is indicative of the age group of the user. At least two features may be included in a set, and at least one high-dimensional feature may be generated for a set.

In the above step (c3), in the case that the high-dimensional features generated for respective sets have high-dimensional features among which the feature correlation satisfies the requirement for generating the high-dimensional feature, steps of performing the set partitioning and generating the high-dimensional feature are repeatedly performed through the high-dimensional feature generation module until the high-dimensional features generated for respective sets have no high-dimensional features among which the feature correlation satisfies the requirement for generating the high-dimensional feature. Specifically, after generation of the high-dimensional features for the first time, a large number of original features to be processed can be reduced to obtain a small number of high-dimensional features. For these high-dimensional features, in the case that these high-dimensional features have high-dimensional features among which the feature correlation satisfies the requirement for generating the high-dimensional feature, set partitioning is further performed on these high-dimensional features to obtain sets one by one, where at least two features with strong feature correlation are included in each set, and the process of generating the high-dimensional feature for the features in each set is repeated, which is equivalent to repeating the step (c2), such that the number of the features is further reduced, and higher-dimensional features are further obtained.

After generation of the high-dimensional features for the second time, for the generated high-dimensional features, in the case that the high-dimensional features have high-dimensional features among which the feature correlation satisfies the requirement for generating the high-dimensional feature, steps of performing the set partitioning and generating the high-dimensional feature are repeatedly performed, that is, set partitioning and generation of the high-dimensional feature are further performed, until the high-dimensional features generated for respective sets have no high-dimensional features among which the feature correlation satisfies the requirement for generating the high-dimensional feature, that is, until set partitioning can no longer be performed on the generated high-dimensional features. Through iterative generation of the high-dimensional feature, the number of the features can be reduced, and a plurality of high-dimensional features with explicit entity meanings can be obtained, which play an important role in determining whether the user is a living user.

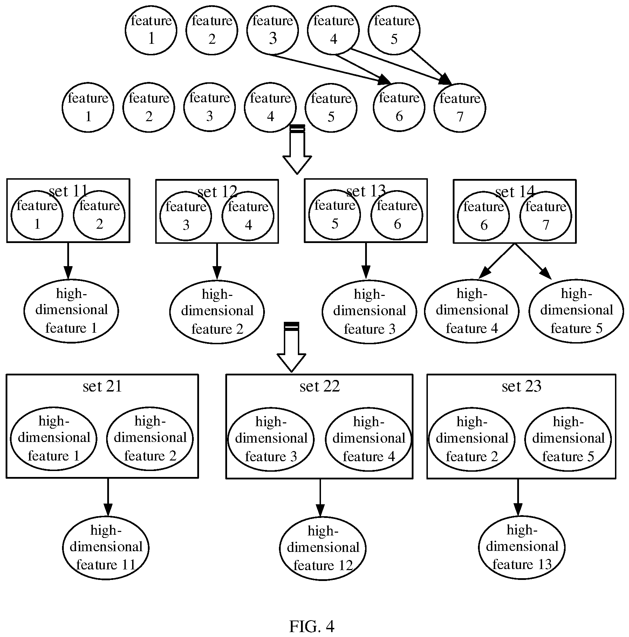

FIG. 4 is a schematic diagram illustrating a process of generating a high-dimensional feature according to an embodiment of the present invention. As shown in FIG. 4, the fusion features include five features, i.e., feature 1, feature 2, feature 3, feature 4, and feature 5, for example. After the fusion features are obtained, supplementary features, i.e., feature 6 and feature 7, are first generated to obtain seven features, i.e., features 1-7, thereby increasing the number of the features. The feature 6 is generated from the features 3 and 4, and the feature 7 is generated from the features 4 and 5. Next, set partitioning is performed to obtain four sets, including set 11, set 12, set 13, and set 14. Each set includes two features as shown in FIG. 4, and respective sets may include features that repeat each other. For the features included in each set, one or two high-dimensional features are generated, thereby obtaining five high-dimensional features as shown in FIG. 4, including high-dimensional feature 1, high-dimensional feature 2, high-dimensional feature 3, high-dimensional feature 4, and high-dimensional feature 5.

Next, the set partitioning and generation of the high-dimensional feature are repeated to obtain three sets, including set 21, set 22, and set 23, and generate three high-dimensional features, including high-dimensional feature 11, high-dimensional feature 12, and high-dimensional feature 13. It is found that there are no high-dimensional features in these three high-dimensional features among which the feature correlation satisfies the requirement for generating the high-dimensional feature, such that the set partitioning is no longer performed and generation of the high-dimensional feature is completed.

In the step (c4), it is determined whether the user corresponding to the face image is a living user through the result determination module based on finally generated high-dimensional features and a feature classification rule corresponding to each of the finally generated high-dimensional features. In an embodiment, determining whether the user corresponding to the face image is a living user through the result determination module based on the finally generated high-dimensional features and the feature classification rule corresponding to each of the finally generated high-dimensional features, includes steps (c41) and (c42).

At step (c41), each of the finally generated high-dimensional features is classified through the result determination module based on the finally generated high-dimensional features and the feature classification rule corresponding to each of the finally generated high-dimensional features, with a classification result including belonging to a living feature or not belonging to a living feature.

At step (c42), in response to a proportion of the number of high-dimensional features of which the classification result is belonging to the living feature being greater than a preset proportion, it is determined that the user corresponding to the face image is the living user, otherwise it is determined that the user corresponding to the face image is not the living user.

First, in the step (c41), each of the finally generated high-dimensional features is classified through the result determination module based on the finally generated high-dimensional features and the feature classification rule corresponding to each of the finally generated high-dimensional features, with a classification result including belonging to a living feature or not belonging to a living feature. For example, three high-dimensional features are finally generated, and the three high-dimensional features are that the skin of the user is fleshy skin, the cheeks of the user are not covered, and the eyes of the user are not covered with sunglasses. Then, each of the finally generated high-dimensional features is classified based on the feature classification rule corresponding to each of the finally generated high-dimensional features, with the classification results being, in order, belonging to a living feature, belonging to a living feature, and belonging to a living feature.

A plurality of high-dimensional features can be learned and a feature classification rule corresponding to each of the plurality of high-dimensional features can be generated by the multi-modal living body detection model during training, such that classification can be performed on each of the finally generated high-dimensional features.

Next, in the step (c42), a proportion of the number of high-dimensional features of which the classification result is belonging to the living feature is calculated, where the proportion is equal to a ratio of the number of the high-dimensional features of which the classification result is belonging to the living feature to the number of the finally generated high-dimensional features. In the case that the proportion is greater than a preset proportion, it is determined that the user corresponding to the face image is a living user, and in the case that the proportion is less than or equal to the preset proportion, it is determined that the user corresponding to the face image is not a living user. For example, in the preceding example, the number of the high-dimensional features of which the classification result is belonging to the living feature is divided by the number of the finally generated high-dimensional features to obtain a proportion of 100%, which is greater than the preset proportion of 90%, such that it is determined that the user corresponding to the face image is a living user.

It can be seen that in this embodiment, the features of the plurality of preset face parts can be combined through the multi-modal living body detection model to determine whether the user corresponding to the face image is a living user, thereby effectively improving the accuracy of the living body detection.

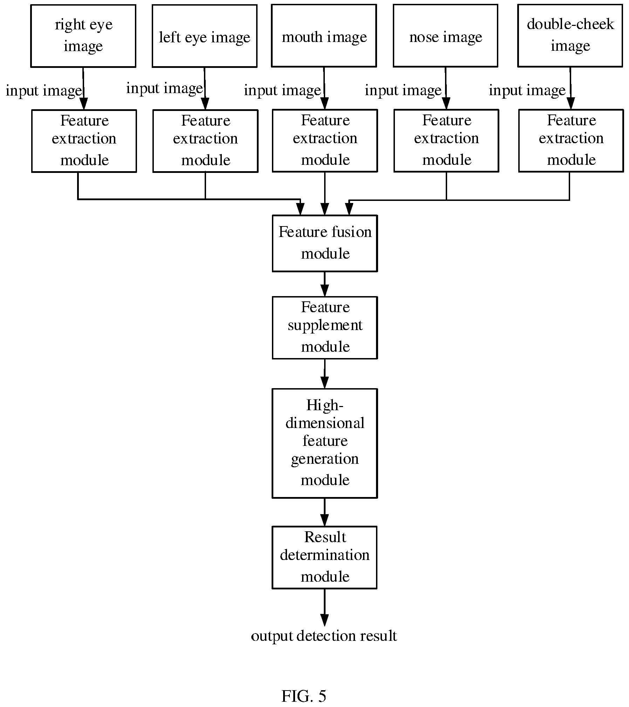

FIG. 5 is a schematic diagram illustrating application of a method for living body detection according to an embodiment of the present invention. As shown in FIG. 5, in the method, a right eye image, a left eye image, a mouth image, a nose image, and a double-cheek image are acquired from a face image, where the double-cheek image is created by splicing a left cheek image and a right cheek image together. The right eye image, the left eye image, the mouth image, the nose image, and the double-cheek image are input to a multi-modal living body detection model. The multi-modal living body detection model performs feature extraction through a plurality of feature extraction modules, performs feature fusion through a feature fusion module, generates a supplementary feature through a feature supplement module, generates a high-dimensional feature through a high-dimensional feature generation module, and outputs a detection result through a result determination module.

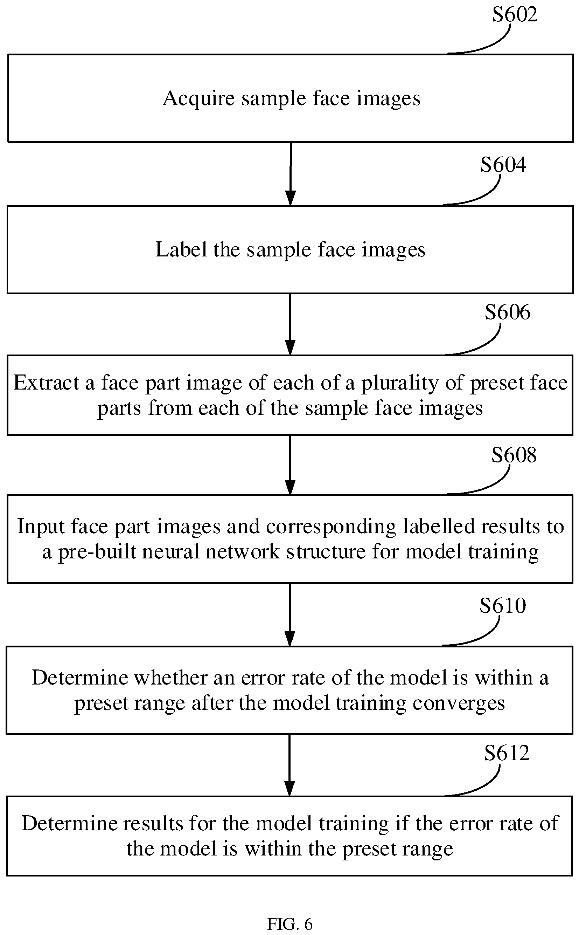

In an embodiment, the multi-modal living body detection model is a neural network model based on deep learning. FIG. 6 is a schematic diagram illustrating a process of training a multi-modal living body detection model according to an embodiment of the present invention, which may be performed by a backend server for model training. As shown in FIG. 6, the process includes the following steps 602 to 612.

At step S602, one or more sample face images are acquired.

In this step, the sample face images may be captured manually.

At step S604, the sample face images are labelled.

In this step, the labelled results include living body and non-living body.

At step S606, a face part image of each of a plurality of preset face parts is extracted from each of the sample face images.

In this step, for each of the sample face images, a face part image of each preset face part is extracted from the sample face image. For the extraction process, reference may be made to the description of step S102.

At step S608, face part images and corresponding labelled results are input to a pre-built neural network structure for model training.

In this step, face part images belonging to the same sample face image are used as a set of samples, and each set of samples and the labelled result corresponding to each set of samples are input to the pre-built neural network structure for model training. Various existing neural network structures may be used as the neural network structure for the multi-modal living body detection model.

At step S610, after the model training converges, it is determined whether an error rate of the model is within a preset range.

At step S612, if the error rate of the model is within the preset range, results for the model training are determined.

However, if the error rate exceeds the preset range, parameters of the model may be adjusted, and then the model is trained until the model training converges and the error rate of the model is within the preset range.

As above, particular embodiments of the present invention have been described. Other embodiments are within the scope of the appended claims. In some cases, the steps recited in the claims may be performed in a different order and still achieve desired results. In addition, the processes depicted in the drawings do not necessarily require the particular order or consecutive order shown to achieve the desired results. In some embodiments, multitasking and parallel processing may be advantageous.

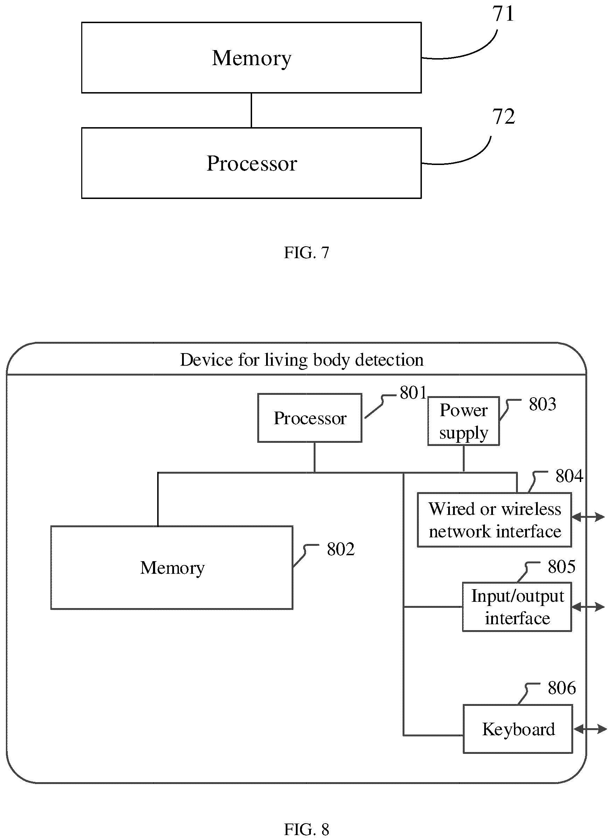

The specific process of performing living body detection on the face image based on the multi-modal living body detection model has been described above. Based on the same idea, the embodiments of the present invention further provide an apparatus for living body detection. FIG. 7 is a schematic structural diagram illustrating an apparatus for living body detection according to an embodiment of the present invention. As shown in FIG. 7, the apparatus includes a memory 71 and a processor 72.

The memory 71 is configured to store a face image to be detected and a pre-trained multi-modal living body detection model.

The processor 72 is configured to: perform image extraction on a plurality of preset face parts involved in the face image to obtain a plurality of face part images; obtain fusion features through the multi-modal living body detection model based on the plurality of face part images; generate a high-dimensional feature through the multi-modal living body detection model based on the fusion features; and determine whether a user corresponding to the face image is a living user based on the high-dimensional feature.

Optionally, the processor 72 is further configured to: perform image matting on a face in the face image to obtain a face matting image; perform position detection on each preset face part in the face matting image by using a preset face part detection algorithm to obtain key position coordinates of each preset face part; and perform image matting on each preset face part in the face matting image based on the key position coordinates of each preset face part to obtain a respective face part image.

Optionally, the processor 72 is further configured to: detect position coordinates of preset feature points from the face image, and perform pose correction processing on the face in the face image based on the position coordinates of the preset feature points; and perform image matting on the pose-corrected face in the face image to obtain the face matting image.

Optionally, the multi-modal living body detection model includes a plurality of feature extraction modules corresponding one-to-one with the preset face parts, and a feature fusion module. The processor 72 is further configured to: perform feature extraction on the face part images respectively through the feature extraction modules to obtain features of the preset face parts; and fuse the features of the preset face parts through the feature fusion module according to a preset feature fusion algorithm to obtain the fusion features.

Optionally, the multi-modal living body detection model includes a feature supplement module, a high-dimensional feature generation module, and a result determination module. The processor 72 is further configured to: perform combination analysis on the fusion features through the feature supplement module to obtain a supplementary feature, and use the fusion features and the supplementary feature together as to-be-processed features; perform set partitioning on the to-be-processed features through the high-dimensional feature generation module, and generate the high-dimensional feature for each set based on features in the set, where feature correlation among the features in each set satisfies requirement for generating the high-dimensional feature; in the case that high-dimensional features generated for respective sets have high-dimensional features among which the feature correlation satisfies the requirement for generating the high-dimensional feature, repeatedly perform steps of performing the set partitioning and generating the high-dimensional feature through the high-dimensional feature generation module until the high-dimensional features generated for respective sets have no high-dimensional features among which the feature correlation satisfies the requirement for generating the high-dimensional feature; and determine whether the user corresponding to the face image is a living user through the result determination module based on finally generated high-dimensional features and a feature classification rule corresponding to each of the finally generated high-dimensional features.

Optionally, the processor 72 is further configured to: classify each of the finally generated high-dimensional features through the result determination module based on the finally generated high-dimensional features and the feature classification rule corresponding to each of the finally generated high-dimensional features, with a classification result including belonging to a living feature or not belonging to a living feature; and in response to a proportion of the number of high-dimensional features of which the classification result is belonging to the living feature being greater than a preset proportion, determine, through the result determination module, the user corresponding to the face image is the living user, otherwise determine the user corresponding to the face image is not the living user.

Optionally, the plurality of preset face parts includes at least two of a left eye, a right eye, a nose, a mouth, a left cheek, and a right cheek.

In this embodiment, a plurality of face part images are obtained by performing image extraction on a plurality of preset face parts involved in a face image, fusion features are obtained through a pre-trained multi-modal living body detection model based on the plurality of face part images, a high-dimensional feature is generated based on the fusion features, and it is determined whether a user corresponding to the face image is a living user based on the high-dimensional feature. Features of the plurality of preset face parts are combined to determine whether a user corresponding to the face image is a living user, which effectively improves the accuracy of the living body detection compared to a living body detection method based on features of a single face part.

It should be understood by those skilled in the art that the apparatus for living body detection in this embodiment can be configured to implement the processes of the method for living body detection as described above, and achieve the same effects and functions as the method, where the detailed description thereof should be similar to the description of the method embodiments as described above, and will not be repeated herein to avoid tediousness.

Based on the same idea, the embodiments of the present invention further provide a device for living body detection. FIG. 8 is a schematic structural diagram illustrating a device for living body detection according to an embodiment of the present invention, as shown in FIG. 8. The device for living body detection may vary considerably in configuration or performance, and may include one or more processors 801 and a memory 802 in which one or more storage application programs or data may be stored. The memory 802 may be transient storage or persistent storage. The application programs stored in the memory 802 may include one or more modules (not shown in the drawings), each of which may include a series of computer-executable instructions for the device for living body detection. Further, the processor 801 may be configured to communicate with the memory 802 to execute the series of computer-executable instructions in the memory 802 on the device for living body detection. The device for living body detection may further include one or more power supplies 803, one or more wired or wireless network interfaces 804, one or more input/output interfaces 805, and one or more keyboards 806.

In this embodiment, the device for living body detection includes a memory and one or more programs, where the one or more programs are stored in the memory, and the one or more programs may include one or more modules, where each module may include a series of computer-executable instructions for the device for living body detection, which are configured to be executed by one or more processors to perform steps of:
acquiring a face image to be detected, and performing image extraction on a plurality of preset face parts involved in the face image to obtain a plurality of face part images;
obtaining fusion features through a pre-trained multi-modal living body detection model based on the plurality of face part images; and
generating a high-dimensional feature through the multi-modal living body detection model based on the fusion features, and determining whether a user corresponding to the face image is a living user based on the high-dimensional feature.

Optionally, the computer-executable instructions, when executed, are configured to: perform image matting on a face in the face image to obtain a face matting image; perform position detection on each preset face part in the face matting image by using a preset face part detection algorithm to obtain key position coordinates of each preset face part; and perform image matting on each preset face part in the face matting image based on the key position coordinates of each preset face part to obtain a respective face part image.

Optionally, the computer-executable instructions, when executed, are configured to: detect position coordinates of preset feature points from the face image, and perform pose correction processing on the face in the face image based on the position coordinates of the preset feature points; and perform image matting on the pose-corrected face in the face image to obtain the face matting image.

Optionally, the multi-modal living body detection model includes a plurality of feature extraction modules corresponding one-to-one with the preset face parts, and a feature fusion module. The computer-executable instructions, when executed, are configured to: perform feature extraction on the face part images respectively through the feature extraction modules to obtain features of the preset face parts; and fuse the features of the preset face parts through the feature fusion module according to a preset feature fusion algorithm to obtain the fusion features.

Optionally, the multi-modal living body detection model includes a feature supplement module, a high-dimensional feature generation module, and a result determination module. The computer-executable instructions, when executed, are configured to: perform combination analysis on the fusion features through the feature supplement module to obtain a supplementary feature, and use the fusion features and the supplementary feature together as to-be-processed features; perform set partitioning on the to-be-processed features through the high-dimensional feature generation module, and generate the high-dimensional feature for each set based on features in the set, where feature correlation among the features in each set satisfies requirement for generating the high-dimensional feature; in the case that high-dimensional features generated for respective sets have high-dimensional features among which the feature correlation satisfies the requirement for generating the high-dimensional feature, repeatedly perform steps of performing the set partitioning and generating the high-dimensional feature through the high-dimensional feature generation module until the high-dimensional features generated for respective sets have no high-dimensional features among which the feature correlation satisfies the requirement for generating the high-dimensional feature; and determine whether the user corresponding to the face image is a living user through the result determination module based on finally generated high-dimensional features and a feature classification rule corresponding to each of the finally generated high-dimensional features.

Optionally, the computer-executable instructions, when executed, are configured to: classify each of the finally generated high-dimensional features through the result determination module based on the finally generated high-dimensional features and the feature classification rule corresponding to each of the finally generated high-dimensional features, with a classification result including belonging to a living feature or not belonging to a living feature; and in response to a proportion of the number of high-dimensional features of which the classification result is belonging to the living feature being greater than a preset proportion, determine, through the result determination module, the user corresponding to the face image is the living user, otherwise determine the user corresponding to the face image is not the living user.

Optionally, the plurality of preset face parts includes at least two of a left eye, a right eye, a nose, a mouth, a left cheek, and a right cheek.

In this embodiment, a plurality of face part images are obtained by performing image extraction on a plurality of preset face parts involved in a face image, fusion features are obtained through a pre-trained multi-modal living body detection model based on the plurality of face part images, a high-dimensional feature is generated based on the fusion features, and it is determined whether a user corresponding to the face image is a living user based on the high-dimensional feature. Features of the plurality of preset face parts are combined to determine whether a user corresponding to the face image is a living user, which effectively improves the accuracy of the living body detection compared to a living body detection method based on features of a single face part.

It should be understood by those skilled in the art that the device for living body detection in this embodiment can be configured to implement the processes of the method for living body detection as described above, and achieve the same effects and functions as the method, where the detailed description thereof should be similar to the description of the method embodiments as described above, and will not be repeated herein to avoid tediousness.

The embodiments of the present invention further provide a storage medium for storing computer-executable instructions, which, when executed, are configured to perform steps of:
acquiring a face image to be detected, and performing image extraction on a plurality of preset face parts involved in the face image to obtain a plurality of face part images;
obtaining fusion features through a pre-trained multi-modal living body detection model based on the plurality of face part images; and
generating a high-dimensional feature through the multi-modal living body detection model based on the fusion features, and determining whether a user corresponding to the face image is a living user based on the high-dimensional feature.

Optionally, the computer-executable instructions, when executed, are configured to: perform image matting on a face in the face image to obtain a face matting image; perform position detection on each preset face part in the face matting image by using a preset face part detection algorithm to obtain key position coordinates of each preset face part; and perform image matting on each preset face part in the face matting image based on the key position coordinates of each preset face part to obtain a respective face part image.

Optionally, the computer-executable instructions, when executed, are configured to: detect position coordinates of preset feature points from the face image, and perform pose correction processing on the face in the face image based on the position coordinates of the preset feature points; and perform image matting on the pose-corrected face in the face image to obtain the face matting image.

Optionally, the multi-modal living body detection model includes a plurality of feature extraction modules corresponding one-to-one with the preset face parts, and a feature fusion module. The computer-executable instructions, when executed, are configured to: perform feature extraction on the face part images respectively through the feature extraction modules to obtain features of the preset face parts; and fuse the features of the preset face parts through the feature fusion module according to a preset feature fusion algorithm to obtain the fusion features.

Optionally, the multi-modal living body detection model includes a feature supplement module, a high-dimensional feature generation module, and a result determination module. The computer-executable instructions, when executed, are configured to: perform combination analysis on the fusion features through the feature supplement module to obtain a supplementary feature, and use the fusion features and the supplementary feature together as to-be-processed features; perform set partitioning on the to-be-processed features through the high-dimensional feature generation module, and generate the high-dimensional feature for each set based on features in the set, where feature correlation among the features in each set satisfies requirement for generating the high-dimensional feature; in the case that high-dimensional features generated for respective sets have high-dimensional features among which the feature correlation satisfies the requirement for generating the high-dimensional feature, repeatedly perform steps of performing the set partitioning and generating the high-dimensional feature through the high-dimensional feature generation module until the high-dimensional features generated for respective sets have no high-dimensional features among which the feature correlation satisfies the requirement for generating the high-dimensional feature; and determine whether the user corresponding to the face image is a living user through the result determination module based on finally generated high-dimensional features and a feature classification rule corresponding to each of the finally generated high-dimensional features.

Optionally, the computer-executable instructions, when executed, are configured to: classify each of the finally generated high-dimensional features through the result determination module based on the finally generated high-dimensional features and the feature classification rule corresponding to each of the finally generated high-dimensional features, with a classification result including belonging to a living feature or not belonging to a living feature; and in response to a proportion of the number of high-dimensional features of which the classification result is belonging to the living feature being greater than a preset proportion, determine, through the result determination module, the user corresponding to the face image is the living user, otherwise determine the user corresponding to the face image is not the living user.

Optionally, the plurality of preset face parts includes at least two of a left eye, a right eye, a nose, a mouth, a left cheek, and a right cheek.

In this embodiment, a plurality of face part images are obtained by performing image extraction on a plurality of preset face parts involved in a face image, fusion features are obtained through a pre-trained multi-modal living body detection model based on the plurality of face part images, a high-dimensional feature is generated based on the fusion features, and it is determined whether a user corresponding to the face image is a living user based on the high-dimensional feature. Features of the plurality of preset face parts are combined to determine whether a user corresponding to the face image is a living user, which effectively improves the accuracy of the living body detection compared to a living body detection method based on features of a single face part.

It should be understood by those skilled in the art that the storage medium in this embodiment can be configured to implement the processes of the method for living body detection as described above, and achieve the same effects and functions as the method, where the detailed description thereof should be similar to the description of the method embodiments as described above, and will not be repeated herein to avoid tediousness.

The system, apparatus, module, or unit set forth in the above embodiments may be embodied by a computer chip or an entity, or may be embodied by a product having certain functions. An exemplary implementation device is a computer. In particular, the computer may be, for example, a personal computer, a laptop computer, a cellular phone, a camera phone, a smart phone, a personal digital assistant, a media player, a navigation device, an email device, a game console, a tablet computer, a wearable device, or a combination of any of these devices.

For the convenience of description, the above apparatus is described separately in terms of functions divided into various units. However, the functions of the various units may be implemented in one or more software and/or hardware while practicing the present invention.

As will be appreciated by those skilled in the art, embodiments of the present invention may be provided as methods, systems, or computer program products. Accordingly, the present invention may be in the form of a fully hardware embodiment, a fully software embodiment, or an embodiment combining software and hardware aspects. Furthermore, the present invention may be in the form of a computer program product embodied on one or more computer-usable storage media having computer-usable program codes embodied therein, including, but not limited to, magnetic disk storage, CD-ROMs, optical storage, etc.

The present invention is described with reference to flow charts and/or block diagrams of methods, devices (systems), and computer program products according to embodiments of the present invention. It should be understood that each flow in the flow chart and/or each block in the block diagram, and combinations of flows in the flow chart and/or blocks in the block diagram, can be implemented by computer program instructions. These computer program instructions may be provided to a processor in a general purpose computer, a special purpose computer, an embedded processor, or other programmable data processing device to produce a machine, such that the instructions, executed by the processor in the computer or other programmable data processing device, create means for implementing functions specified in one or more flows in the flow chart and/or one or more blocks in the block diagram.

The computer program instructions may also be stored in a computer-readable memory that can direct a computer or other programmable data processing device to function in a particular manner, such that the instructions stored in the computer-readable memory produce an article of manufacture including instruction means, which implements the functions specified in one or more flows in the flow chart and/or one or more blocks in the block diagram.

The computer program instructions may also be loaded onto a computer or other programmable data processing device to cause a series of operational steps to be performed on the computer or other programmable device to produce computer-implemented processing, such that the instructions executed on the computer or other programmable device provide steps for implementing the functions specified in one or more flows in the flow chart and/or one or more blocks in the block diagram.

In an exemplary configuration, a computing device includes one or more processors (CPUs), input/output interfaces, network interfaces, and memory.

The memory may be in the form of volatile memory, random access memory (RAM), and/or non-volatile memory in a computer-readable medium, such as read-only memory (ROM) or flash memory (flash RAM). Memory is an example of a computer-readable medium.

Computer-readable media, including permanent and non-permanent, removable and non-removable media, may be implemented in any method or technique for information storage. Information may be computer-readable instructions, data structures, modules of programs, or other data. Examples of storage media for computers include, but are not limited to, phase-change RAM (PRAM), static random access memory (SRAM), dynamic random access memory (DRAM), other types of random access memory (RAM), read-only memory (ROM), electrically erasable programmable read-only memory (EEPROM), flash memory or other memory technologies, compact disk read-only memory (CD-ROM), digital versatile disk (DVD) or other optical storage, magnetic cassette, magnetic tape, magnetic disk storage or other magnetic storage device, or any other non-transmission medium that can be used to store information that can be accessed by a computing device. As defined herein, computer-readable media does not include transitory media, such as modulated data signals and carriers.

It should also be noted that, terms "include," "comprise," or any other variant thereof, are intended to cover non-exclusive inclusion, such that a process, method, good, or device including a list of elements includes not only those elements but also other elements not expressly listed or inherent to such process, method, good, or device. Without further limitation, an element defined by the phrase "includes a ..." does not preclude the presence of another such element in the process, method, good, or device including that element.

The present invention may be described in the general context of computer-executable instructions executed by a computer, such as program modules. In general, the program modules include routines, programs, objects, components, data structures, and the like that perform particular tasks or implement particular abstract data types. The present invention may also be practiced in a distributed computing environment where tasks are performed by remote processing devices that are linked via a communication network. In the distributed computing environment, the program modules may be located in local and remote computer storage media including storage devices.

Various embodiments in the present invention are described in a progressive manner, with the same or similar parts among various embodiments being referred to each other, and each embodiment focusing on differences from other embodiments. In particular, for the system embodiments, since they are basically similar to the method embodiments, they are described in a relatively simple manner, and relevant parts can be found in the description of the method embodiments.

The foregoing are merely examples of the present invention and are not intended to limit the present invention. Various modifications and variations of the present invention will be apparent to those skilled in the art. Any modifications, equivalents, improvements, and the like made within the spirit and principles of the present invention shall be included within the scope of the claims of the present invention.

## Claims

1. A method for living body detection, **characterized in that**, the method comprises steps of:
performing image extraction on a plurality of preset face parts involved in the acquired face image to be detected to obtain a plurality of face part images;
obtaining fusion features through a pre-trained multi-modal living body detection model based on the plurality of face part images; and
generating a high-dimensional feature through the multi-modal living body detection model based on the fusion features, and determining whether a user corresponding to the face image is a living user based on the high-dimensional feature.

2. The method according to claim 1, wherein performing image extraction on the plurality of preset face parts involved in the face image to obtain the plurality of face part images, comprises:
performing image matting on a face in the face image to obtain a face matting image;
performing position detection on each of the preset face parts in the face matting image by using a preset face part detection algorithm to obtain key position coordinates of each preset face part; and
performing image matting on each preset face part in the face matting image based on the key position coordinates of each preset face part to obtain a respective face part image.

3. The method according to claim 2, wherein performing image matting on the face in the face image to obtain the face matting image, comprises:
detecting position coordinates of preset feature points from the face image, and performing pose correction processing on the face in the face image based on the position coordinates of the preset feature points; and
performing image matting on the pose-corrected face in the face image to obtain the face matting image.

4. The method according to claim 1, wherein the multi-modal living body detection model comprises a plurality of feature extraction modules corresponding one-to-one with the preset face parts, and a feature fusion modules; and obtaining the fusion features through the pre-trained multi-modal living body detection model based on the plurality of face part images, comprises:
performing feature extraction on the face part images respectively through the feature extraction modules to obtain features of the preset face parts; and
fusing the features of the preset face parts through the feature fusion module according to a preset feature fusion algorithm to obtain the fusion features.

5. The method according to claim 1, wherein the multi-modal living body detection model comprises a feature supplement module, a high-dimensional feature generation module, and a result determination module; and generating the high-dimensional feature through the multi-modal living body detection model based on the fusion features, and determining whether the user corresponding to the face image is the living user based on the high-dimensional feature, comprises:
performing combination analysis on the fusion features through the feature supplement module to obtain a supplementary feature, and using the fusion features and the supplementary feature together as to-be-processed features;
performing set partitioning on the to-be-processed features through the high-dimensional feature generation module, and generating a high-dimensional feature for each set based on features in the set, wherein feature correlation among the features in each set satisfies requirement for generating the high-dimensional feature;
in the case that high-dimensional features generated for respective sets have high-dimensional features among which the feature correlation satisfies the requirement for generating the high-dimensional feature, repeatedly performing steps of performing the set partitioning and generating the high-dimensional feature through the high-dimensional feature generation module until the high-dimensional features generated for respective sets have no high-dimensional features among which the feature correlation satisfies the requirement for generating the high-dimensional feature; and
determining whether the user corresponding to the face image is the living user through the result determination module based on finally generated high-dimensional features and a feature classification rule corresponding to each of the finally generated high-dimensional features.

6. The method according to claim 5, wherein determining whether the user corresponding to the face image is the living user through the result determination module based on the finally generated high-dimensional features and the feature classification rule corresponding to each of the finally generated high-dimensional features, comprises:
classifying each of the finally generated high-dimensional features through the result determination module based on the finally generated high-dimensional features and the feature classification rule corresponding to each of the finally generated high-dimensional features, with a classification result comprising belonging to a living feature or not belonging to a living feature; and
in response to a proportion of a number of high-dimensional features of which the classification result is belonging to the living feature being greater than a preset proportion, determining, through the result determination module, the user corresponding to the face image is the living user, otherwise determining the user corresponding to the face image is not the living user.

7. The method according to claim 1, wherein obtaining the fusion features through the pre-trained multi-modal living body detection model based on the plurality of face part images, comprises:
performing feature extraction on the face part images through the multi-modal living body detection model to obtain features of the preset face parts; and
fusing the features of the preset face parts through the multi-modal living body detection model according to a preset feature fusion algorithm to obtain the fusion features.

8. The method according to claim 1, wherein generating the high-dimensional feature through the multi-modal living body detection model based on the fusion features, and determining whether the user corresponding to the face image is the living user based on the high-dimensional feature, comprises:
performing combination analysis on the fusion features through the multi-modal living body detection model to obtain a supplementary feature, and using the fusion features and the supplementary feature together as to-be-processed features;
performing set partitioning on the to-be-processed features through the multi-modal living body detection model, and generating a high-dimensional feature for each set based on features in the set, wherein feature correlation among the features in each set satisfies requirement for generating the high-dimensional feature;
in the case that high-dimensional features generated for respective sets have high-dimensional features among which the feature correlation satisfies the requirement for generating the high-dimensional feature, repeatedly performing steps of performing the set partitioning and generating the high-dimensional feature through the multi-modal living body detection model until the high-dimensional features generated for respective sets have no high-dimensional features among which the feature correlation satisfies the requirement for generating the high-dimensional feature; and
determining whether the user corresponding to the face image is the living user through the multi-modal living body detection model based on finally generated high-dimensional features and a feature classification rule corresponding to each of the finally generated high-dimensional features.

9. The method according to claim 8, wherein determining whether the user corresponding to the face image is the living user through the multi-modal living body detection model based on the finally generated high-dimensional features and the feature classification rule corresponding to each of the finally generated high-dimensional features, comprises:
classifying each of the finally generated high-dimensional features through the multi-modal living body detection model based on the finally generated high-dimensional features and the feature classification rule corresponding to each of the finally generated high-dimensional features, with a classification result comprising belonging to a living feature or not belonging to a living feature; and
in response to a proportion of a number of high-dimensional features of which the classification result is belonging to the living feature being greater than a preset proportion, determining the user corresponding to the face image is the living user, otherwise determining the user corresponding to the face image is not the living user.

10. The method according to any one of claims 1 to 9, wherein the plurality of preset face parts comprise at least two of a left eye, a right eye, a nose, a mouth, a left cheek, and a right cheek.

11. An apparatus for living body detection, **characterized in that**, the apparatus comprises:
a memory configured to store a face image to be detected and a pre-trained multi-modal living body detection model; and
a processor configured to: perform image extraction on a plurality of preset face parts involved in the face image to obtain a plurality of face part images; obtain fusion features through the multi-modal living body detection model based on the plurality of face part images; generate a high-dimensional feature through the multi-modal living body detection model based on the fusion features; and determine whether a user corresponding to the face image is a living user based on the high-dimensional feature.

12. A device for living body detection, comprising a processor, and a memory configured to store computer-executable instructions which, when executed, cause the processor to implement the steps of the method according to any one of claims 1 to 10.

13. A storage medium for storing computer-executable instructions which, when executed by a processor, implement the steps of the method according to any one of claims 1 to 10.
